(19) Europäisches Patentamt
European Patent Office
Office européen des brevets

(11) **EP 0 584 746 B1**

(12) **EUROPÄISCHE PATENTSCHRIFT**

(45) Veröffentlichungstag und Bekanntmachung des Hinweises auf die Patenterteilung:
**05.02.1997 Patentblatt 1997/06**

(51) Int Cl.⁶: **F16K 47/08**, F03B 11/04, F16L 55/027

(21) Anmeldenummer: **93113374.8**

(22) Anmeldetag: **20.08.1993**

(54) **Druckreduzierventil**

Pressure reducing valve

Soupape de réduction de pression

(84) Benannte Vertragsstaaten:
**DE FR GB**

(30) Priorität: **24.08.1992 AT 1697/92**

(43) Veröffentlichungstag der Anmeldung:
**02.03.1994 Patentblatt 1994/09**

(73) Patentinhaber: **EFG TURBINEN- UND KRAFTWERKSANLAGENBAU EFG ENERGIEFORSCHUNGS- UND ENTWICKLUNGS Ges.m.H. & Co KG.**
**A-9560 Feldkirchen (AT)**

(72) Erfinder: **Buchelt, Benno, Dipl.-Ing.**
**A-9063 Maria Saal / Kärnten (AT)**

(74) Vertreter: **Weinhold, Peter, Dr. et al**
**Patentanwälte**
**Dr. Weinhold, Dannenberg,**
**Dr. Gudel, Schubert**
**Siegfriedstrasse 8**
**80803 München (DE)**

(56) Entgegenhaltungen:
CH-A- 88 620          DE-A- 3 602 255
DE-A- 3 740 341       US-A- 991 074
US-A- 1 088 215       US-A- 3 704 763
US-A- 4 381 045

- SOVIET PATENTS ABSTRACTS, Sektion Q, Woche 8910, 30. August 1988, DERWENT PUBLICATIONS LTD., London *SU-A-1420 195 (VLASENKO A YA)

**Beschreibung**

FACHGEBIET-EINORDNUNG:

Die Vorliegende Erfindung behandelt eine Vorrichtung zur Reduktion des Druckes in Flüssigkeiten und Gasen von einem Anfangsdruck $p_A$ auf einen Enddruck $p_E$ . Dabei können Anfangs- und Enddruck beliebige Niveauwerte annehmen. Der Enddruck kann auch dem Druck der Umgebung entsprechen, wie es zum Beispiel bei den im Fachjargon des Wasserturbinenbaues manchmal fälschlich als ENERGIEVERNICHTER bezeichneten Apparaten der Fall ist, deren Aufgabe die Erfindung besonders gut übernehmen kann.

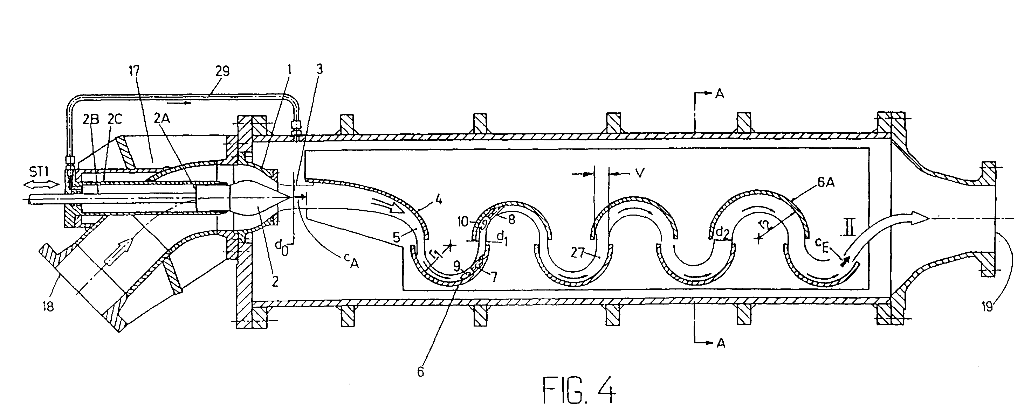

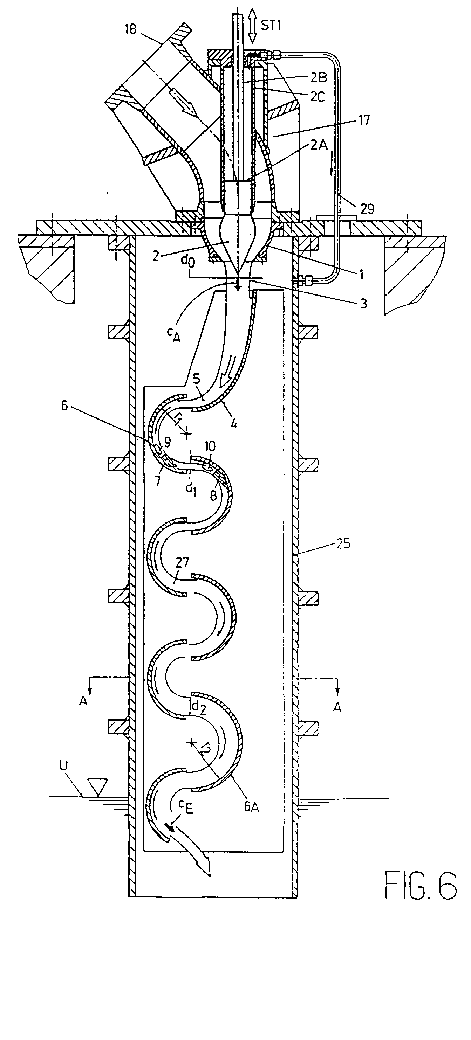

Der austretende Strahl des Mediums kann entweder vom gleichen Medium mit niedrigem Enddruck $p_E$ umspült sein, wenn das druckentspannte Medium in einem Rohr weitergeleitet wird (Fig.4,5,7,11)oder der austretende Strahl kann von einem anderen Medium (z.B. Luft im Falle eines "Energievernichters" in einem Trinkwasser-Kraftwerk) umspült sein, wenn der Abfluß in ein freies Becken mündet (Fig. 6) und das Innengehäuse 25 belüftet ist.

VORTEILE DES ERFINDUNGSGEMÄSSEN DRUCKREDUZIERERS:

Im Vergleich zu herkömmlichen Druckreduzierern ist der erfindungsgemäße

1. kavitationsfrei,
2. lärmarm,
3. verschleißarm,
4. verschmutzungsunempfindlich und
5. versehen mit der Eigenschaft, die Durchflußmenge unabhängig von der Druckreduzierung getrennt regeln

zu können,
wie nachfolgend im Detail begründet wird.

STAND DER TECHNIK:

Physikalisch kann Druckreduktion nur durch Umwandlung der abzubauenden statischen Druckenergie in kinetische Strahlenergie erfolgen, die anschließend verwirbelt, wobei die kinetischen Energien der aufeinander reibenden Wirbel sich in Wärme verwandeln, die durch die Wand des Reduzierventiles entweicht. Dies haben herkömmliche und erfindungsgemäße Druckreduzierventile zwangsläufig gemeinsam, die konstruktiven Mittel sind jedoch verschieden.

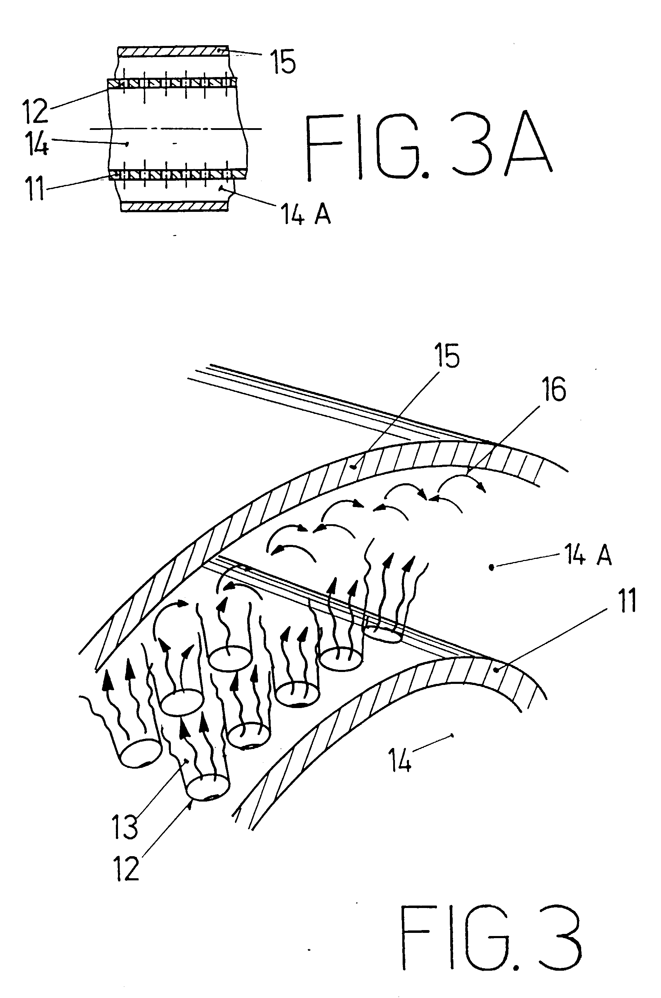

Um möglichst direkt eine Vielzahl kleiner Wirbel zu erzeugen, benützen viele herkömmliche Konstruktionen gemäß Fig.3A und Fig. 3 zwischen Hochdruckraum 14 und Niederdruckraum 14A rohrartige Wände mit einer Vielzahl von kleinen Bohrungen 12, die als scharkantige Düsen fungieren und eine Vielzahl von Freistrahlen 13 erzeugen, die in Schwingungen geraten, weil der Druck innerhalb dieser Freistrahlen der gleiche ist, wie der der Umgebung der Freistrahlen, in der sich die zahlreichen beabsichtigten Wirbel 16 befinden,die ihrerseits die überdrucklosen Freistrahlen 13 zu Schwingungen anregen. Diese Konstruktion ähnelt sehr der einer Sirene. Die Rotationsbewegung der Lochblenden einer Sirene wird hier durch die Schwingungen der Freistrahlen ersetzt. So kommt es in Abhängigkeit vom Druckgefälle zu großem Lärm, der durch die Außenwände 15 nach außen dringt. Durch die Schwingungen der gegenüber dem umgebendem Plenum 14A überdruckfreien Strahlen 13 kommt es in den Bohrungen 12 der Wände 11 bei großen Druckgefällen zur Kavitation und Verschleiß der Bohrungen. Schmutzhaltige Flüssigkeiten können die vielen kleinen Bohrungen verstopfen. Durch Ineinanderstecken mehrerer konzentrischer Röhren 11 versucht man diese Nachteile durch Entspannen über mehrere kleinere Druckstufen mit teilweisem Erfolg bei herkömmlichen Viellochdüsen zu mildern.

Eine anderes herkömmliches Konstruktionsprinzip-hauptsächlich angewandt für die Druckreduzierung von Gasen Schalldämpfern- sieht dem erfindungsgemäßen Prinzip in zweidimensionaler Schnittdarstellung ähnlich, wie z.B. das Patent SU 1420-195-A, unterscheidet sich aber räumlich durch die Rotationssymmetrie der Umlenkschaufeln im Gegensatz zu den zweidimensional zylindrisch gekrümmten Umlenkschaufeln 6 der erfindungsgemäßen Ausführung mit den als Reflexionswänden 35 gedachten Begrenzungen, welche die sich kreuzenden Sekundärströmungen 28 auf den Schaufeln 6 erzeugen, was nur durch Abweichung von der Rotationssymmetrie möglich ist.Andere bekannte Ausführungen haben zwar zweidimensionale Umlenkungen aber geradlinige Führungsbleche oder Röhren zwischendurch, wodurch der erfindungsgemäß notwendige spontane Wechsel der Krümmung nicht möglich ist (DE 37 40 341 A)

DAS ERFINDUNGSGEMÄSSE PRINZIP:

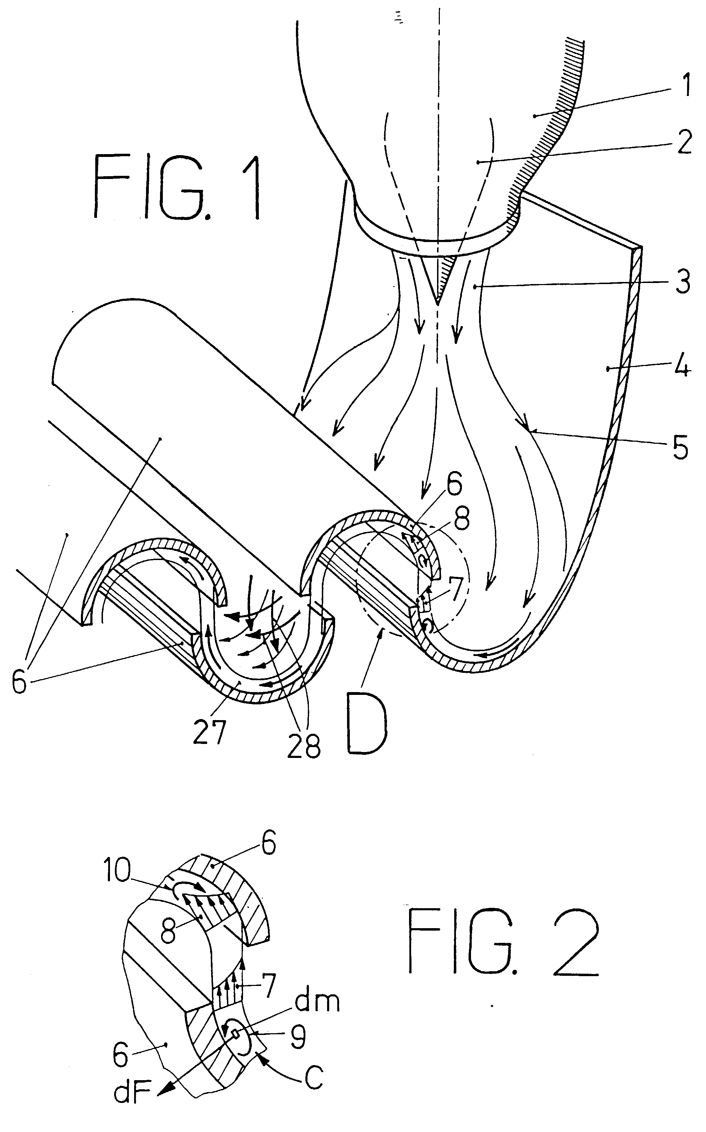

Dieses wird in Fig.1 und Fig.2 illustriert, wobei Fig. 2 das vergrößerte Detail D der Fig. 1 darstellt. Eine Düse 1 mit einer Reguliernadel 2 für die Regelung der Durchflußmenge nach Art der bekannten Düsen für Pelton-Wasserturbinen erzeugt einen einzigen dicken Freistrahl 3 anstelle von etwa hundert dünner Freistrahlen in herkömmlichen Lochröhren. Dieser Freistrahl trifft auf eine schrägangestellte gekrümmte Ablenkfläche 4 und breitet sich dort infolge Fliehkraft zu einem anfänglich dünnen Film 5 aus, der eine Anzahl von Umlenkschaufeln 6 mit alternativ wechselnder Krümmung durcheilt und dabei seine kinetische Energie auf folgende Weise verliert:

Nach dem Stand der Technik mit einem lückenhaften Angebot an Formeln zur zahlenmäßigen Erfassung physikalischer Vorgänge ist man dazu verleitet, die Wandreibung der großen Oberfläche der Umlenkschaufeln 6 in Relation zum strömenden dünnen Fluidfilm als dominierende Ursache für den Energieverlust aufzufassen. Berechnungen des Druckverlustes mit der in der Fachliteratur bekannten, leicht anwendbaren Formel

$$\Delta p = \lambda (d_h/L) \rho (c^2/2)$$

mit " $d_h$ " als mittlerem hydraulisch gleichwertigem Durchmesser, der in diesem Fall für die doppelte Filmdicke zur Berücksichtigung der freien Oberfläche zu wählen ist zeigen, daß man außergewöhnlich große Oberflächen der Umlenkschaufeln 6 benötigen würde, um einen nennenswerten Abbau an kinetischer Energie zu erzielen. Das erfindungsgemäße Prinzip sieht also aus der Lehrbuchsicht ungünstig aus. Einen weiteren Beweis dafür, daß das erfindungsgemäße Prinzip gemäß dem Stand der Technik nicht erfolgreich sein kann, liefert die Erfahrung über die Strömung in Peltonschaufeln: Demnach beträgt die mittlere relative Austrittsgeschwindigkeit $w_2$ nur etwa das 0.96 - fache der relativen Eintrittsgeschwindigkeit $w_1$.

Diese Umstände waren bisher keine Empfehlungen der "state of the art" für die Idee, erfindungsgemäße Druckreduzierer zu bauen.

Der erfindungsgemäße Gedanke besteht nun darin, daß durch den wiederholten Wechsel der Krümmung der Umlenkschaufeln 6 sich infolge der wechselnden Fliehkraft dF (Fig. 2 ), die auf Masseteilchen dm wirkt, auch die GESCHWINDIGKEITSPROFILE 7 und 8 , die a) wegen der Wandreibung und b) unabhängig davon noch mehr durch die Fliehkraftwirkung nach bekannten Gesetzen von der Wand zur freien Oberfläche zunehmen, daß sich also diese Geschwindigkeitsprofile STÄNDIG UMKEHREN - vergleiche Profil 7 mit Profil 8 in Fig. 2 -, wodurch Wirbel 9 im Flüssigkeitsfilm mit der mittleren Strömungsgeschwindigkeit C zusätzlich zu jenen durch Wandreibung verursachten angeregt werden.Die Drehrichtung der Wirbel 9 entsteht durch das Geschwindigkeitsprofil 7 dem sich die mittlere Strömungsgeschwindigkeit C überlagert. In der nachfolgenden Umlenkschaufel kehrt sich das Gefälle des Geschwindigkeitsprofiles um ( Profil 8) wodurch sich auch die internen Wirbel des Flüssigkeits-oder Gasfilms umkehren (Wirbel 10, vergleiche mit Wirbel 9). Es kommt also bei der erfindugsgemäßen Anordnung zu einer erhöhten Reibung im Inneren des Flüssigkeits- oder Gasfilms, ZUSÄTZLICH und UNABHÄNGIG VON DER WANDREIBUNG.

Durch diese in der Strömungsfachliteratur gemäß dem Stand der Technik nicht angeführten Fakten, die auch formelmäßig nicht so direkt erfaßbar sind wie die Wandreibung, kommt es bei der erfindungsgemäßen Konstruktion zu einer im Mittel etwa 0.7 fachen Ausflußgeschwindigkeit pro Umlenkschaufel 6 im Vergleich zur Einströmgeschwindigkeit, im Gegensatz zur bereits erwähnten etwa 0.96- fachen Ausflußgeschwindigkeit bei Peltonbechern, wo nur eine einmalige etwa 170°- Umlenkung erfolgt. Wenn man diesen Geschwindigkeitsreduktionsfaktor pro 180°-Umlenkung mit $k_R$ bezeichnet, die Anfangsgeschwindigkeit mit $C_A$, die Endgeschwindigkeit mit $C_E$, die Zahl der 180°-Umlenkungen mit z , dann ist bei der grob vereinfachenden Annahme, daß $k_R$ pro Umlenkung konstant sei

$$C_E = C_A \, k_R^{\;z}$$

und daraus die Zahl der erforderlichen 180°- Umlenkungen

$$z = (\ln C_E - \ln C_A )/ \ln k_R$$

wobei gewisse Geometrie-Proportionen eingehalten werden müssen, damit diese Einfachformeln zutreffen. So muß die Breite der Umlenkschaufeln 6 mindestens etwa 8 mal $d_0$ betragen, wenn $d_0$ der Freistrahldurchmesser nach der Peltondüse ist ( siehe Fig.4) und der kleinste Radius $r_1$ einer Umlenkschaufel 6 mindestens etwa $d_0$ betragen.

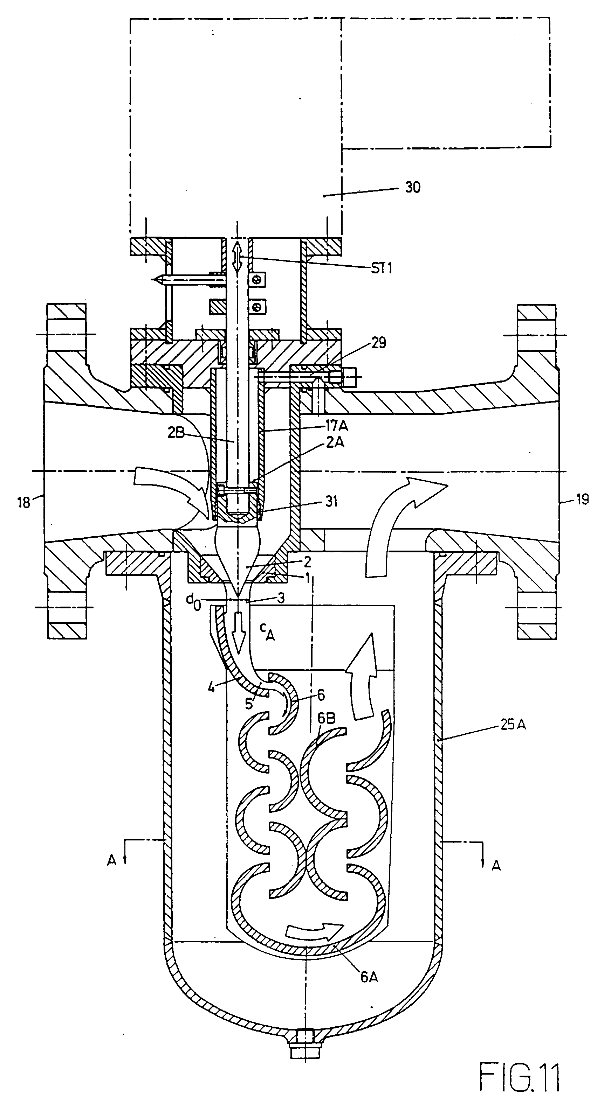

Trotzdem kann man den erfindungsgemäßen Druckreduzierer so kompakt bauen, daß er zum Beispiel gemäß Fig. 11 für einen Druckabbau von 60 b in die üblichen Flanschanschlußmaße für Druckreduzierventile paßt.

Mehrere hundert bar Druckabbau sind auf kompakten Raum möglich. Bei Gasen muß bei Überschreitung des kritischen Druckverhältnisses eine Lavaldüse eingesetzt werden.

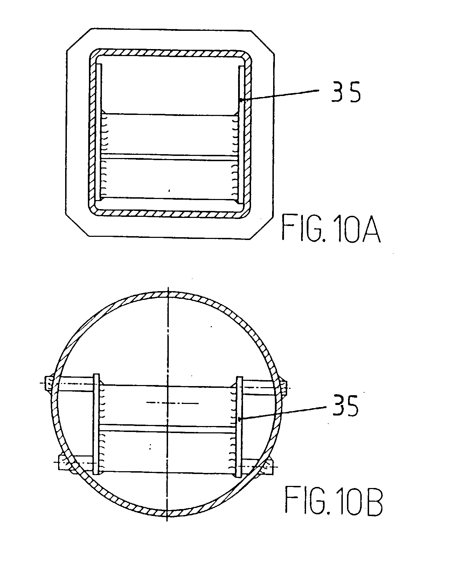

Ein Teil der Wirbel der erfindungsgemäßen Konstruktion entsteht auch die Reflexion der schrägen Strömung an den Seiten-Begrenzungswänden (35)der Umlenkschaufeln (6)zu sehen in Fig.10a und 10B, so daß es gemäß Fig.1 auch zu sich kreuzenden schrägen Strömen 28 kommt, die aufeinander reiben.

DER VORTEIL DER KAVITATIONSFREIHEIT der erfindungsgemäßen Ausführung kommt daher, daß die Krümmung der Umlenkschaufeln 4, 6, 6A und 6B den Flüssigkeitsfilm einer ständig wirksamen Fliehkraft und somit einem leichten statischem Überdruck in richtung Wand aussetzt, so daß es zu keiner Strömungsablösung mit Unterdruckgebieten und Kavitation kommen kann.

DER VORTEIL DER LÄRMARMUT der erfindungsgemäßen Ausführung hängt gleichfalls mit der Fliehkraftwirkung der gekrümmten Umlenkschaufeln 6, 6A, 6B zusammen: Es gibt keine Vielzahl von schwingenden Einzel-Freistrahlen, wie bei herkömmlichen Druckreduzierern, die hauptsächlich den Lärm erzeugen. Die Wirbel der erfindungsgemäßen Ausführung werden durch die Fliehkraft zu einem dichten Film mit einer relativ ruhigen Oberfläche zusammengepreßt.

DER VORTEIL DER VERSCHLEISSARMUT wird teilweise bedingt durch die Kavitationsfreiheit und teilweise durch das Vorhandenseins nur eines einzigen dicken Freistrahles mit einer ungleich geringeren Berührungsoberfläche in der Düse als die Vielzahl von dünneren Freistrahlen in herkömmlichen Druckreduzierern.

DER VORTEIL DER SCHMUTZUNEMPFINDLICHKEIT wird durch das Fehlen vieler kleiner Düsenbohrungen der herkömmlichen Druckreduzierer erzielt.

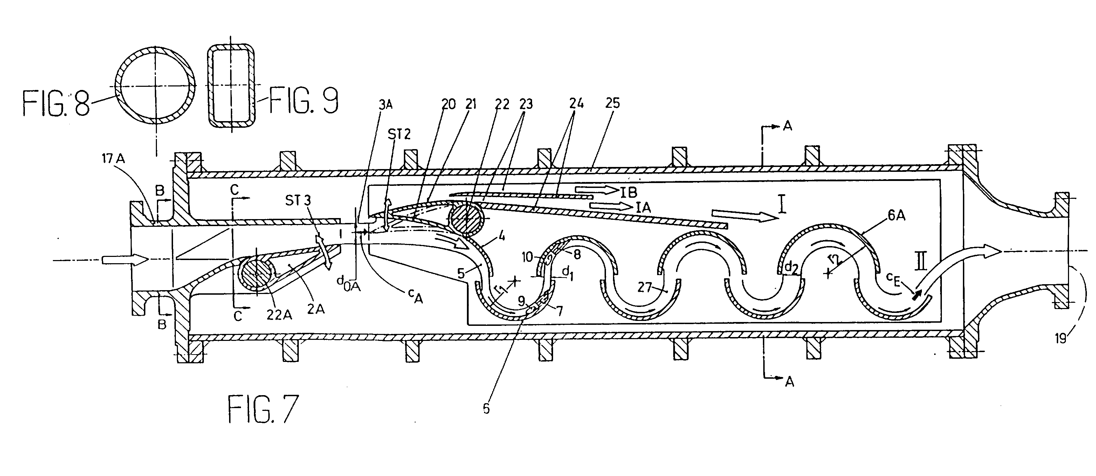

DER VORTEIL DER GETRENNTEN BEEINFLUSSBARKEIT VON DURCHFLUSSMENGE UND DRUCKREDUZIERUNG hängt mit der bekannten Pelton-Düsenregelung zusammen: Im Freistrahl wird nur die Menge durch die axiale Verstellung der Düsennadel geregelt, während die Drosselwirkung des Ventiles dadurch praktisch überhaupt nicht beeinflußt wird, im Gegensatz zu herkömmlichen Druckreduzierventilen. Das Druckgefälle wird durch den Gegendruck passiv bestimmt oder kann auch durch eine Klappe 20 nach Fig. 7 aktiv beeinflußt werden. Bei TEILLAST (d.h. bei geringerem Volumsstrom) würden weniger Umlenkschaufeln 6 wegen des dünneren Fluidfilmes genügen. Dann löst sich die Strömung bei Erreichung des Gegendrucks einfach selbsttätig von den überflüssigen Umlenkschaufeln ab.

BESCHREIBUNG DER FIGUREN DER EINZELNEN AUSFÜHRUNGEN:

Fig.1, bezw. Fig.2 als vergrößerter Ausschnitt D der Fig. 1 wurde bereits im vorangegangenen Kapitel über das Wesen der Erfindung beschrieben.
Fig.3 und Fig.3A beschreiben herkömmliche Prinzipien der Druckreduktion und wurden bereits im Kapitel zum Stand der Technik beschrieben.
Fig.4 zeigt einen erfindungsgemäßen Druckreduzierer mit Gegendruck im Abflußflansch 19 und einem Peltondüsenstock 17, mit Düse 1, Düsennadel 2, Stellstange 2B in einem Trägerrohr 2C, so daß eine Stufenkolbenfläche 2A entsteht, die über eine Leitung 29 zum Raum niedrigen Drucks entlastet ist. Die Stange 2B führt mit der Nadel 2 die Stellbewegung ST1 zur Regelung der Durchflußmenge aus. Die Hubbewegung kann durch eine elektrische oder hydraulische Anlenkung seltener durch eine pneumatische im Rahmen einer automatischen Regelung erzielt werden oder von Hand aus. Dies ist hier offen gelassen. Da der Flüssigkeitsfilm 27 immer langsamer wird, bis die Endgeschwindigkeit $C_E$ erreicht wird, nimmt seine Dicke von $d_1$ am Anfang auf $d_2$ am Ende zu und muß daher der mittlere Radius der Umlenkschaufeln 6 von $r_1$ am Anfang auf $r_2$ am Ende zunehmen, um dem Kontinuitätsgesetz Rechnung zu tragen. Die restlichen Bezeichnungen wurden bereits anläßlich der Beschreibung der Fig.1 und Fig.2 erläutert.
Den Schnitt A-A zeigen die Figuren 10A und 10B als zwei von grundsätzlich mehreren Möglichkeiten. Wesentlich bei den Figuren 10A und 10B sind die Dokumentation der ebenen Seitenwandbegrenzungen der zweidimensionalen Umlenkschaufeln 6, durch welche die schrägen, sich kreuzenden Strömungsrichtungen auf den Schaufeln 6, in Fig. 1 als schräge Stromlinien 28 zu sehen, reflektiert werden. Auf diese Art entsteht die bereits eingangs geschilderte Sekundärströmungen, mit zusätzlichen Energie verbrauchenden Wirbeln, die aufeinander reiben.

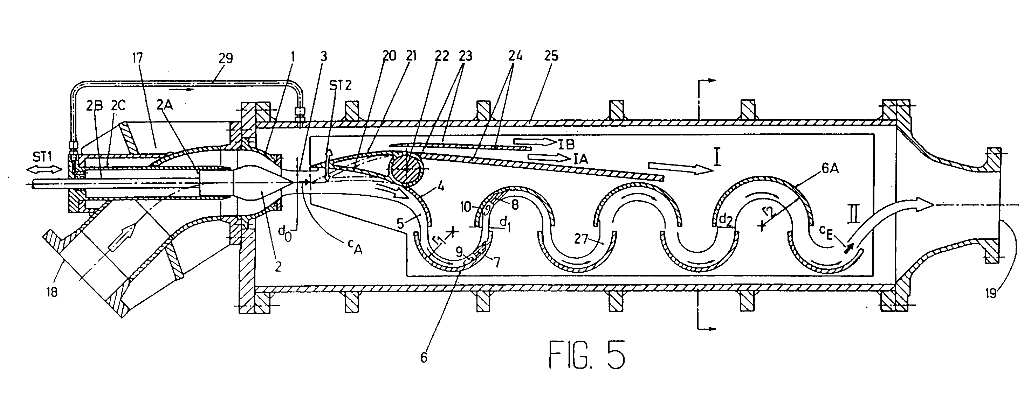

Die Fig. 5 zeigt eine eher selten in Anwendung kommende Variante zur aktiven Gegendruckbeeinflussung mittels einer Schneidenklappe 20 mit Stellbewegung ST2 um die Achse 22, während die Düsennadel 2 mit der Stellbewegung ST1 nur das Durchflußvolumen allein beeinflußt.
Will man einen höheren Gegendruck, dann schwenkt die Klappe 20 in den Strahl 3, so daß ein abgezweigter Film über die Rückfläche 21 in die Diffusorkanäle 23 gebildet von den Blechen 24 gelangt, wo in den beiden Teilströmen IB und IA ein Teil des statischen Druckes wieder rückgewonnen wird, so daß sich ein Teillaststrom I mit höherem Druck mit dem Teillaststrom II niedrigeren Druckes zu einem geeigneten Mischdruck vereinigt, wobei natürlich lärmerzeugende Wirbel in Kauf genommen werden müssen.
Die Fig. 6 zeigt einen besonders wichtigen Anwendungsfall der Erfindung, nämlich die kavitationsfreie und lärmarme Druckreduzierung in Nebenauslässen von Wasserkraftwerken, z.B. bei Trinkwasserkraftwerken:
Das Gehäuse 25 des erfindungsgemäßen Druckreduzierers mündet nach unten in den Unterwasserspiegel U und der Innenraum des Gehäuses 25 ist in geeigneter Weise belüftet, so daß der Freistrahl 3, bezw. der Flüssigkeitsfilm 5 am Blech 4, bezw. Film 27 auf den Schaufeln 6 in der Umgebung "Luft" befindet. Wenn die zur Wasserkraftanlage gehörenden Turbinen Peltonturbinen sind, dann kann der gleiche Düsenstock 17 wie bei der Peltonturbine verwendet werden es kann auch die Regelung der Stellbewegung der Nadel 2 völlig gleichartig erfolgen, was vorteilhaft innerhalb der Maschinen-Gesamtanlage des Kraftwerkes nicht nur bei der Herstellung, sondern auch bei der Wartung und Ersatzteilhaltung ist.
Die Fig. 7 Zeigt einen Druckreduzierer mit Gegendruck mit koaxialem Eintritts-und Austrittsflansch in Röhrenbauart. Man könnte auch hier eine innengesteuerte Peltondpüse verwenden. Statt dessen ist hier eine wirkungsgleiche Klappe 2A, die um eine Achse 22A dreht gezeigt, die einen rechteckigen Strahl 3A mit der Dicke $d_{0A}$ erzeugt.
Dazu geht der runde Eintrittskanal 17A wie Fig. 8 als Schnitt B-B und Fig. 9 als Schnitt C-C zeigen vom runden in einen rechteckigen Querschnitt über. Der Rest entspricht der Fig. 5, könnte aber auch mit Fig. 4 kombiniert sein. Diese Bauart gilt für den Fall, daß aus Platzgründen keine Krümmer erlaubt sind und der Druckreduzierer ein Teil der Rohrleitung sein muß. Fig. 10A und Fig. 10B sind mögliche Querschnitte A-A der Figuren 4,5,6,7 und 11.
Die Fig. 11 zeigt die konstruktive Anwendung des erfindungsgemäßen Prinzips der Druckreduktion in einem Ventil herkömmlicher Anschlußmaße für 40 l/s Durchfluß, Eingangsnenndruck von 100 b und einer Druckabsenkung von 60 b bei 150 mm Nennweite der Anschlußflansche 18 und 19 und beweist, daß zwischen der üblichen Flanschentfernung genügend Platz zur Anwendung der Erfindung vorhanden ist. Dies läßt sich auch für beliebig andere Zahlenwertekombinationen nachweisen. Wesentlich an der Konstruktion nach Fig. 11 ist die Berücksichtigung der Kontinuitätsgleichung, die sich in einem Größerwerden der mittleren Radien der Umlenkschaufeln 6 in Strömungsrichtung zu 6A und 6B äußert, weil der Flüssigkeits-oder Gasfilm langsamer und damit dicker wird. Auch hier bringt ein Ausgleichskanal 29 innerhalb des Führungsrohres 17A nicht nur den Abfluß der Leckmenge durch die Lagerbüchse 31 sondern auch eine Druckentlastung auf die Kolbenfläche 2A, so daß die Hubleistung des Spindelantriebes 30 gering ist. Bei Hydraulikantrieben wäre der typische Kraftrichtungswechsel an der Düsennadel 2 im Laufe des Hubes durch eine nicht gezeichnete Schließfeder zu beseitigen. Bei einem elektromechanischen selbsthemmenden Gewindespindelantrieb entfällt die Notwendigkeit einer Schließfeder.

**Patentansprüche**

1.  Druckreduzierventil für Flüssigkeiten und Gase nach dem Prinzip sich wiederholender Umlenkungen
    dadurch gekennzeichnet,
    daß ein durch die Druckdifferenz in einer einzigen Düse (1) gebildeter Freistrahl durch eine schräg zur Strahlachse angestellte zweidimensional gekrümmte Wand (4) sich in einen dünnen Strömungsfilm (5) verwandelt, der weiter eine Serie von zweidimensional stetig gekrümmten schalenartigen Umlenkschaufeln (6) durchläuft, wobei diese Umlenkschaufeln Zylinderhalbschalen mit geradlinigen Erzeugenden darstellen und der Strömungsfilm (5) nach Austreten aus einer vorhergehenden Schale stets annähernd tangential auf die nachfolgende Schale trifft mit einer Abweichung von maximal 30° von der Tangente an die Schale (6) im Schnittpunkt mit dem auftreffenden Fluidfilm (5) und wo ferner die Krümmungstendenz der unmittelbar aufeinander folgenden Zylinderhalbschalen (6) immer so wechselt, so daß die Krümmungsradien abwechselnd auf beiden Seiten des Fluid-Filmes (27) liegen und keinerlei geradlinige Strömungsführung zwischen den aufeinander folgenden Umlenkschaufeln (6, 6A und 6B) vorkommt und daß diese zweidimensionalen Umlenkschaufeln (6, 6A und 6B) durch dazu annähernd senkrecht stehende Wände (35) begrenzt werden.

2.  Druckreduzierventil nach Anspruch 1 mit stetig nach einer beliebigen Kurve, vorzugsweise Kreisbogen, zweidimensional gekrümmten Schaufeln (6) dadurch gekennzeichnet,

daß der mittlere Krümmungsradius der Umlenkschaufeln (6) von einem niedrigen Anfangswert ($r_1$) am Beginn der Umlenkgitter zu einem größeren Wert ($r_2$) in den letzten Schaufeln (6A, 6B) ansteigt und daß auch der Versatz (v) in Strömungsrichtung steigt.

3.  Druckreduzierventil nach Anspruch 1 mit zweidimensional gekrümmten Umlenkschaufeln (6)
    dadurch gekennzeichnet,
    daß die Umlenkschaufeln (6) in einer Variante durchgehend kongruente Krümmungsprofile aufweisen und sich nur durch den in Strömungsrichtung größer werdenden Versatz (v) unterscheiden.

4.  Druckreduzierventil nach Anspruch 1
    dadurch gekennzeichnet,
    daß in den Freistrahl (3) eine schneidenartige Ablenkklappe (20) um eine Drehachse (22) schwenkbar eingreifen kann, so daß ein Teil des ursprünglichen Strahles (3) abgespalten wird und Diffusoren (23) zugeführt wird , worauf der solcherart mit statischem Druck angereicherte Teilstrom (I) dem durch die Umlenkschaufeln (6) geführten Teilstrom (II) wieder zugeführt wird.

5.  Druckreduzierventil nach Anspruch 1 mit zweidimensional gekrümmten Umlenkschaufeln (6, 6A und 6B)
    dadurch gekennzeichnet,
    daß im Falle der Anwendung als Nebenauslaß-Druckreduzierer in Wasserkraftwerken, die gleichen Peltonturbinen-Düsenstöcke (17) zur Erzeugung des Freistrahles (3) am Druckreduzierventil angeordnet sind, wie sie an der Peltonturbine vorkommen, wenn die im Maschinensatz zum Druckreduzierer gehörende Turbine vom Typ Pelton ist, so daß innerhalb des Maschinensatzes die Freistrahlen für die unterschiedlichen Zwecke vom gleichartigen, sich wiederholenden Teil, erzeugt werden.

**Claims**

1.  A pressure reducing valve for liquids and gases which works on the principle of repeated reversals of direction, characterised in that an open jet formed by means of the pressure difference in a single nozzle (1) is transformed by means of a two-dimensionally arched wall (4) at an angle to the direction of the jet into a thin fluid film (5) which further passes through a series of two-dimensionally continuously arched shell-shaped reversing vanes (6), wherein said reversing vanes are manifested as cylindrical half shells with straight line generatrices and the fluid film (5) after exiting from a preceding shell always meets the next shell almost tangentially with a maximum deviation of 30° from the tangent to the shell (6) at the intersection point with the impinging fluid film (5) and wherein further the direction of curvature of the cylindrical half shells (6) directly following one another always changes such that the radii of curvature are disposed alternately on both sides of the fluid film (27) and flow guidance in a linear direction between the successive reversing vanes (6,6A and 6B) does not occur and that the said two-dimensional reversing vanes (6, 6A and 6B) are bounded by walls (35) almost perpendicular to them.

2. A pressure reducing valve according to Claim 1 with two-dimensionally continuously arched reversing vanes (6) following any suitable curve, preferably a circular arc, characterised in that the mean radius of curvature of the reversing vanes (6) increases from a low initial value ($r_1$) at the beginning of the reversing rack to a higher value ($r_2$) in the last vanes (6A, 6B) and that further the offset (v) increases in the direction of flow.

3. A pressure reducing valve according to Claim 1 with two-dimensionally arched reversing vanes (6), characterised in that the reversing vanes (6) in one variation have completely congruent curved profiles and differ only in the increasing offset (v) in the direction of flow.

4. A pressure reducing valve according to Claim 1, characterised in that a secant shaped deflecting flap (20) swivelling on a spindle (22) can be introduced into the open jet (3) so that a part of the original jet (3) is separated and led to diffusers (23), whereupon this portion of the flow (I), with its static pressure being increased in this manner, is redirected to the part of the flow (II) which passed through the reversing vanes (6).

5. A pressure reducing valve according to Claim 1 with two-dimensionally arched reversing vanes (6, 6A and 6B), characterised in that in the case of use as a bypass pressure reducer in hydro-electric power generating stations, the pelton turbine choke manifolds (17) used to generate the open jet (3) in the pressure reducing valve are the same as those found in pelton turbines, so that whenever the turbine belonging to the pressure reducer in the generating set is a pelton type, the open jets used for the different purposes inside the generating set are produced by the same recurring component.

**Revendications**

1. Vanne réductrice de pression pour des liquides et des gaz conforme au principe des déflexions répétitives, caractérisée en ce qu'un jet libre, formé par la différence de pression dans une tuyère unique (1), est transformé, par une paroi (4) placée en biais par rapport à l'axe du jet et incurvée, de façon bidimensionnelle, en une mince pellicule d'écoulement (5), qui parcourt au-delà une série d'aubes déflectrices en forme de cuvette (6) présentant une courbure bidimensionnelle continue, ces aubes déflectrices consistant en des cuvettes hémicylindriques à génératrices droites et la pellicule d'écoulement (5), après être sortie d'une cuvette donnée, touchant toujours la cuvette suivante à peu près tangentiellement, avec un écart de 30° au maximum par rapport à la tangente à la cuvette (6) au point de rencontre avec la pellicule de fluide (5) qui arrive, et où, en outre, le sens de la courbure des cuvettes hémicylindriques (6), placées directement l'une à la suite de l'autre, change constamment, afin que les rayons de courbure se trouvent alternativement sur l'une et sur l'autre face de la pellicule de fluide (27) et qu'aucun guidage rectiligne de l'écoulement n'ait lieu entre les aubes déflectrices (6, 6A et 6B) placées l'une à la suite de l'autre, et en ce que ces aubes déflectrices bidimensionnelles (6, 6A et 6B) sont limitées par des parois (35) disposées à peu près perpendiculairement à celles-ci.

2. Vanne réductrice de pression selon la revendication 1, munie d'aubes (6) ayant une courbure bidimensionnelle continue, conforme à une courbe quelconque, de préférence à un arc de cercle, caractérisée en ce que le rayon de courbure moyen des aubes déflectrices (6) croît d'une valeur faible de départ ($r_1$), au début du réseau déflecteur, jusqu'à une valeur plus grande ($r_2$), dans les dernière aubes (6A, 6B), et en ce que le décalage (v) croît également dans la direction de l'écoulement.

3. Vanne réductrice de pression selon la revendication 1, munie d'aubes déflectrices (6) ayant une courbure bidimensionnelle, caractérisée en ce que les aubes déflectrices (6), selon une variante, présentent des profils de courbure coïncidents de bout en bout et ne se différencient que par le décalage (v) allant en augmentant dans la direction de l'écoulement.

4. Vanne réductrice de pression selon la revendication 1, caractérisée en ce qu'un volet de déviation (20) en forme de couteau peut s'insérer dans le jet libre (3), par pivotement autour d'un axe de rotation (22), de telle sorte qu'une partie du jet d'origine (3) soit décollée et soit amenée à des diffuseurs (23), après quoi le courant partiel (I) enrichi de cette manière en pression statique est ramené au courant partiel (II) dirigé par les aubes déflectrices (6).

5. Vanne réductrice de pression selon la revendication 1, munie d'aubes déflectrices (6, 6A, 6B) ayant une courbure bidimensionnelle, caractérisée en ce que, dans le cas de l'utilisation comme manodétendeur à sortie auxiliaire dans des centrales hydro-électriques, les mêmes étages à tuyère pour turbines Pelton (17) que ceux qui interviennent sur la turbine Pelton, quand la turbine appartenant au manodétendeur dans le groupe hydro-électrique est du type Pelton, sont disposés sur la vanne réductrice de pression pour produire le jet libre (3), afin qu'à l'intérieur du groupe hydro-électrique, les jets libres pour les buts différents soient produits à partir de la pièce de même nature qui se répète.

FIG. 1

FIG. 2

FIG. 3A

FIG. 3

FIG. 4

FIG. 5

FIG. 6

FIG. 8

FIG. 9

FIG. 7

35

FIG. 10A

35

FIG. 10B

FIG.11